Europäisches Patentamt

European Patent Office

Office européen des brevets

(19)

(11) Veröffentlichungsnummer : **0 121 094**
**B1**

(12) # EUROPÄISCHE PATENTSCHRIFT

(45) Veröffentlichungstag der Patentschrift :
06.05.87

(51) Int. Cl.⁴ : **A 01 F 12/44**

(21) Anmeldenummer : **84102055.5**

(22) Anmeldetag : **28.02.84**

(54) **Reinigungsvorrichtung für Mähdrescher.**

(30) Priorität : 07.03.83 US 472506

(43) Veröffentlichungstag der Anmeldung :
**10.10.84 Patentblatt 84/41**

(45) Bekanntmachung des Hinweises auf die Patenterteilung : **06.05.87 Patentblatt 87/19**

(84) Benannte Vertragsstaaten :
**BE DE FR GB IT**

(56) Entgegenhaltungen :
**WO-A-81 /005 03
DE-B- 1 121 873
FR-A- 1 215 745
FR-A- 2 452 863
US-A- 2 937 647
US-A- 3 334 739
US-A- 3 800 804**

(73) Patentinhaber : **DEERE & COMPANY
1 John Deere Road
Moline Illinois 61265 (US)**

(72) Erfinder : **Peters, Loren William
809 16th Street
Bettendorf Iowa 52722 (US)**
Erfinder : **Turner, Reed James
3106 186th Street, N.
East Moline Illinois 61244 (US)**

(74) Vertreter : **Sartorius, Peter et al
DEERE & COMPANY European Office, Patent Department Postfach 503 Steubenstrasse 36-42
D-6800 Mannheim 1 (DE)**

## Beschreibung

Die Erfindung bezieht sich auf einen Mähdrescher mit Dresch- und Trennteil und mit einem unter diesem angeordneten und diesem nachgeordneten, über den Dresch- und Trennteil mit Erntegut beaufschlagbaren, ein erstes Sieb auf seinem in Fahrtrichtung hinteren Teil aufweisenden Zuführboden, der einen Teil einer Reinigungsvorrichtung bildet, die aus einem weiteren zweiten Sieb sowie einem dritten unterhalb des oberen zweiten Siebes angeordneten Sieb besteht, wobei das erste stromaufwärts liegende Sieb mit seinem stromabwärts liegenden Ende oberhalb des vorderen Endes des vertikal nach unten versetzten zweiten Siebes liegt, die Enden des ersten Siebes und des zweiten Siebes einen Durchlaßspalt für Reinigungsluft bilden und den Sieben ein Gebläse mit einem ersten Auslaßstutzen zugeordnet ist, über den zumindest die stromabwärts liegenden zweiten und dritten Siebe von unten her mit Reinigungsluft beaufschlagt werden, und ein Körnerboden unter dem ersten Sieb angeordnet ist, wobei ein Teil des Erntegutes durch das erste Sieb auf diesen Körnerboden und der andere Teil des Erntegutes über das erste Sieb auf das zweite Sieb und danach auf das dritte Sieb geleitet wird und das gesamte Erntegut letztlich zu einer Reinigungsschnecke geleitet wird.

Es ist bereits ein Mähdrescher bekannt (US-A-3 334 739), der hinter einem schwingend gelagerten Zuführboden zwei untereinander angeordnete Reinigungssiebe aufweist, die über ein Axialgebläse mit Reinigungsluft beaufschlagt werden. Am hinteren Ende des Zuführbodens befindet sich ein geneigt verlaufender Siebteil, der mit Abstand zum vorderen Ende des oberen Reinigungssiebes angeordnet ist und über den ein Teil des Erntegutes ausgesiebt wird, während der übrige Teil des Erntegutes sowie die Strohanteile auf das nachgeordnete obere Reinigungssieb gelangen. Bei relativ großem Erntegutdurchsatz steigen die Verluste bei derartigen Reinigungsvorrichtungen relativ hoch an, da die Reinigung des Erntegutes hauptsächlich über die beiden hinteren, untereinander angeordneten Siebe erfolgt und somit eine übermäßige Belastung der Siebe vorliegt.

Ferner ist ein Mähdrescher der eingangs aufgeführten Art bekannt (DE-A-1 121 873), der mit einem Zuführboden ausgerüstet ist, der auf der gleichen Ebene einen Siebteil aufweist, unter dem ein Auffangboden angeordnet ist. Mittels des Siebteiles wird ein Teil des Gutstromes auf das obere nachgeschaltete Reinigungssieb und mittels des Auffangbodens ein Teil des Erntegutstromes auf das untere Sieb der Reinigungsvorrichtung abgegeben. Mit einer derartigen Vorrichtung werden also beide Siebe mit Erntegut und Stroh- und Kaffteilen beaufschlagt, so daß keine Entlastung der Siebe stattfindet. Somit werden beide Siebe übermäßig belastet, so daß hierdurch eine Beeinträchtigung der Endreinigung des Erntegutes eintritt.

Demgegenüber besteht die Erfindungsaufgabe darin, den Erntegutstrom so zu leiten und in Teilströme aufzuteilen, daß die dem Zuführboden nachgeschalteten Siebe weniger mit Erntegut und Kaffanteilen belastet werden. Diese Aufgabe ist durch die im kennzeichnenden Teil des Anspruches 1 aufgeführten Merkmale gelöst. Durch die vorteilhafte Aufteilung des Erntegutstromes in zwei Teilströme läßt sich eine effektivere Reinigung erzielen, da der erste Erntegutstrom unmittelbar hinter dem Zuführboden so weit gereinigt wird, daß er direkt einer Reinigungsschnecke zugeführt werden kann, während ein zweiter Teilstrom erst den nachgeschalteten Sieben zugeführt wird. Hierdurch wird vermieden, daß das bereits durch den Zuführboden und den zugehörigen Siebteil gereinigte Erntegut nochmals einer weiteren Reinigung unterzogen wird. Hierzu ist es vorteilhaft, daß das unter dem Körnerboden angeordnete Gebläse mit einem ersten nach hinten und einem zweiten nach vorne gerichteten Gebläsekanal versehen ist, wobei der erste Gebläsekanal Reinigungsluft der Unterseite des zweiten Siebes sowie dem darunter angeordneten dritten Sieb zuführt, während der zweite Gebläsekanal an den Bereich des vorderen Endes des Körnerbodens herangeführt ist und Reinigungsluft der Unterseite des ersten Siebes sowie der Oberfläche des Körnerbodens zuführt. Durch die Verwendung des Gebläses mit zwei Auslaßstutzen lassen sich auf einfache Weise auch der Körnerboden und die Unterseite des Siebteiles des Zuführbodens mit Reinigungsluft beaufschlagen und somit eine wirkungsvolle Reinigung im vorderen Bereich der Reinigungsvorrichtung erzielen. Über den anderen Auslaßstutzen, der auf die nachgeschalteten Siebe ausgerichtet ist, werden auf einfache Weise auch diese Siebe mit Reinigungsluft beaufschlagt, über die die Endreinigung des Erntegutes erfolgt. Da das dem Siebteil des Körnerbodens nachgeschaltete Sieb nach unten versetzt angeordnet ist, jedoch auch in einer horizontalen Ebene verläuft, wird einmal eine einwandfreie Förderung des Erntegutes nach hinten gewährleistet und zum anderen eine Durchlaßöffnung zwischen dem hinteren Ende des Siebteiles sowie dem vorderen Ende des oberen Siebes erzielt. Somit kann das von dem Körnerboden abgegebene Erntegut besser mit Reinigungsluft beaufschlagt werden. Hierzu ist es vorteilhaft, daß das erste Sieb fingerartige Leitelemente aufweist, unter denen das vordere Ende des zweiten Siebes liegt, wobei im Bereich und unterhalb des hinteren Endes des ersten Siebes eine Leitvorrichtung angeordnet ist, die das Erntegut in den aus dem ersten Gebläsekanal heraustretenden Reinigungsluftstrom leitet. Die fingerartigen Leitelemente stellen sicher, daß einmal das Erntegut bzw. die Strohanteile mit einer gewissen Zeitverzögerung auf das nachgeschaltete obere Sieb abgegeben werden, so daß auf dem Siebteil des Zuführbodens eine intensive Vorreinigung des Erntegutes erzielt werden kann und somit eine Entlastung des nachgeschalteten oberen Siebes erfolgt. Hierdurch läßt sich also das Gesamtvolumen des Erntegutes, das der Reinigungsvorrichtung zugeführt wird, vergrößern, ohne daß eine Steigerung der Verluste zu befürchten ist. Ferner wird durch die verzögerte Abgabe des Erntegutes eine effektive Windbeaufschlagung des Erntegutes und somit eine gute Ausscheidung und Reinigung des Erntegutes sichergestellt.

In weiterer Ausgestaltung der Erfindung ist es vorteilhaft, daß der Zuführboden aus einem vorderen, undurchlässigen Teil und aus einem mit diesem verbundenen, auf der gleichen Ebene angeordneten Siebteil gebildet ist, der das erste Sieb bildet und unter dem der Körnerboden vorgesehen ist. Vorteilhaft ist es ferner, daß das zweite Sieb bzw. Siebteil sowie das darunter liegende dritte Sieb plan ausgebildet, in etwa horizontal verlaufend angeordnet sind und konvergierend zueinander verlaufen, wobei das Abgabeende des zweiten Siebteils vor einer Durchlaßöffnung des unteren Siebes endet. Außerdem ist es vorteilhaft, daß am hinteren Ende des Körnerbodens eine in Strömungsrichtung geneigt verlaufende Leitvorrichtung und im Bereich des hinteren Endes des stromaufwärts liegenden Siebteiles eine ebenfalls zur Leitvorrichtung konvergierend verlaufende Leitvorrichtung vorgesehen sind, die das Erntegut einer Reinigungsschnecke zuführen, und daß die Durchlaßöffnung im unteren Sieb über der Überkehrschnecke vorgesehen ist. Da lediglich der vordere Teil des Zuführbodens aus einem undurchlässigen Material gebildet ist, während der übrige Teil des Zuführbodens Sieböffnungen aufweist, wird auf einfache Weise eine Vergrößerung der gesamten Sieboberfläche der Reinigungsvorrichtung erzielt und somit über einen langen Zeitraum eine Reinigung des Erntegutes gewährleistet. Ferner wird durch die vorteilhafte Ausbildung des Siebteiles des Zuführbodens auf einfache Weise eine Windbeaufschlagung möglich, da der zweite Auslaßstutzen des Gebläses ohne weiteres an den Siebteil des Zuführbodens herangeführt werden kann. Vorteilhaft ist es außerdem, daß die Gesamtfläche des Siebteiles in etwa gleich groß ist wie die Gesamtfläche des nachgeschalteten oberen Siebes und größer als die Gesamtfläche des undurchlässigen Teils des Körnerbodens. Eine derart große Sieboberfläche läßt sich ohne große Veränderung der Gesamtbauhöhe des Mähdreschers erzielen.

Im folgenden wird die Erfindung anhand von lediglich einen Ausführungsweg darstellenden Zeichnungen näher erläutert.

Es zeigt:

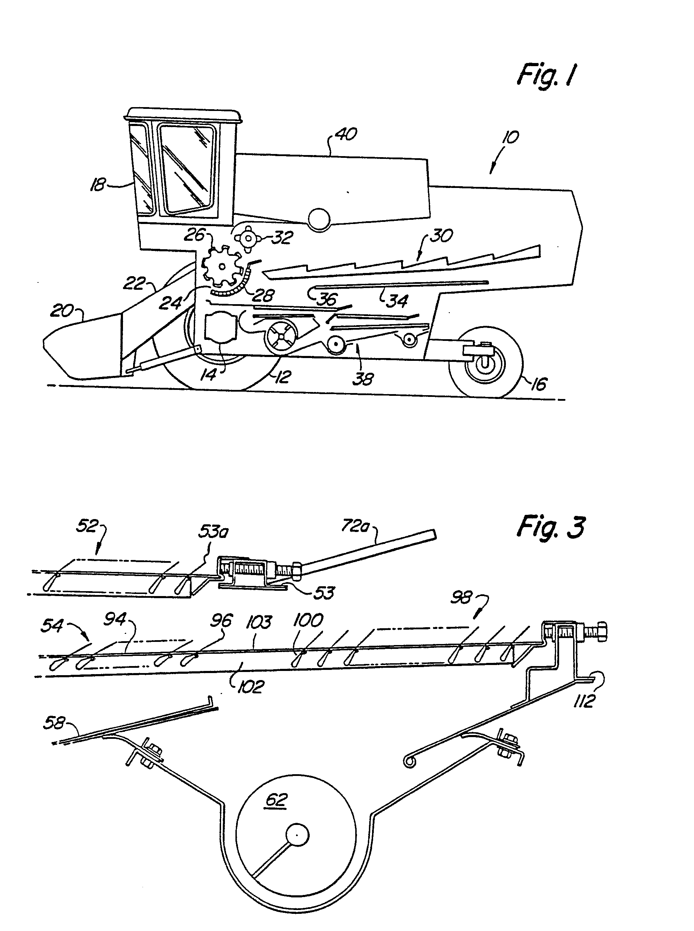

Figur 1 eine schematische Darstellung eines Mähdreschers in Seitenansicht mit Dresch- und Trennvorrichtung sowie der zugehörigen Reinigungsvorrichtung.

Figur 2 eine detaillierte Darstellung der Dresch- und Trennvorrichtung mit der zugehörigen Reinigungsvorrichtung,

Figur 3 das hintere Ende der Reinigungsvorrichtung.

In der Zeichnung ist mit 10 das Gehäuse eines Mähdreschers bezeichnet, der mit vorderen an einer Antriebsachse 14 angeordneten Laufrädern 12 und hinteren steuerbaren Laufrädern 16 ausgerüstet ist. Der Mähdrescher weist ferner im vorderen Bereich eine Fahrerkabine 18 mit den entsprechenden Bedienungsorganen auf. Unterhalb der Fahrerkabine 18 ist an die Frontseite des Mähdreschers ein Schrägfördergehäuse 22 mit einer Erntebergungsvorrichtung 20 vertikal schwenkbar angeschlossen. Die Erntebergungsvorrichtung 20 nimmt das Erntegut vom Feld auf und führt es über das Schrägfördergehäuse 22 einem Dreschzylinder 26 sowie einem diesen teilweise umgebenden Dreschkorb 28 zu. Das vom Dreschkorb 28 nach hinten abgegebene Erntegut wird mit Hilfe einer Strohleittrommel 32 einem Hordenschüttler 30 aufgegeben. Das über den Hordenschüttler 30 ausgeschiedene Erntegut gelangt auf einen Rücklaufboden 34 und wird über diesen nach vorne geleitet und dann über die Kante 36 des Rücklaufbodens einer Reinigungsvorrichtung 38 zugeführt. Das in der Reinigungsvorrichtung 38 vom Kaff bzw. den Strohanteilen getrennte Erntegut wird über in der Zeichnung nicht dargestellte Förderelemente einem Sammelbehälter 40 zugeführt.

Die Reinigungsvorrichtung 38 weist einen horizontal verlaufenden teilweise mit dem Rücklaufboden 34 zusammenwirkenden Zuführboden 50 auf, der das Erntegut, das über den Dreschkorb 28 und den Rücklaufboden 34 abgeschieden wird, aufnimmt und es einem oberen Sieb 52 der Reinigungsvorrichtung zuführt. Das Abgabeende des Siebes 52 weist einen relativ großen Abstand zum Abgabeende des Zuführbodens 50 auf. Ein weiteres Sieb 54 der Reinigungsvorrichtung 38 befindet sich direkt unterhalb des oberen Siebes 52 und nimmt das Erntegut auf, das durch das obere Sieb 52 abgeschieden wird. Ein Gebläse 56 befindet sich im vorderen Bereich und unterhalb des Zuführbodens 50 sowie etwas vor und unterhalb der Siebe 52 und 54, wobei der Gebläsestrom des Gebläses 56 nach hinten und oben gerichtet ist, so daß die Siebe 52 und 54 von unten her mit Reinigungsluft beaufschlagt werden können. Das über die Siebe 52 und 54 abgegebene und gereinigte Erntegut gelangt auf einen nach vorne geneigt verlaufenden Boden 58, über den das Erntegut einer horizontal verlaufenden Reinigungsschnecke 60 zugeführt wird. Zumindest ein Teil des Erntegutes, das über die Siebe 52 und 54 nach hinten gefördert wird, gelangt zu einer am hinteren Ende der Reinigungsvorrichtung 38 vorgesehenen Überkehrschnecke 62, über die das noch nicht ganz gereinigte Erntegut erneut dem Dreschkorb 28 zugeführt wird. Der Zuführboden 50 besteht aus einem vorderen, keine Durchlaßöffnungen aufweisenden Teil 66 sowie einem sich daran anschließenden, auf der gleichen Ebene liegenden, Sieböffnungen aufweisenden Teil 68, an dessen hinteren Kante 70 sich nach hinten und etwas oben erstreckende Finger 72 anschließen. Unterhalb der Kante 70 des Zuführbodens 50 und somit im hinteren Bereich des Zuführbodens befindet sich eine Leitvorrichtung 73. Die Leitvorrichtung 73 wird von dem Zuführboden 50 getragen und erstreckt sich über dessen gesamte Breite und ist nach oben und hinten geneigt verlaufend angeordnet, wobei das obere Ende der Leitvorrichtung 73 sich bis in den Bereich der Kante 70 erstreckt.

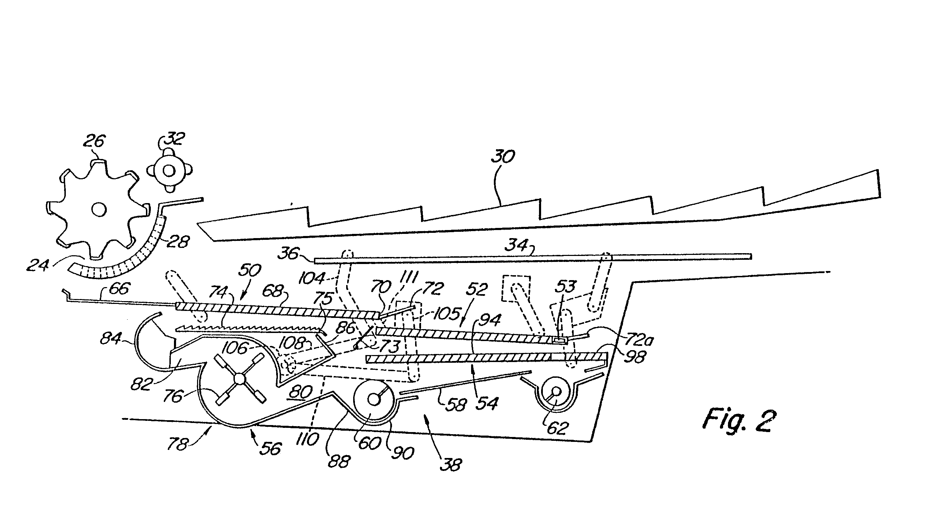

Relativ dicht unterhalb des Zuführbodens 50 befindet sich ein Körnerboden 74, der in etwa die gleiche Länge aufweist wie der Siebteil 68 des Zuführbodens 50. Der Zuführboden 50 sowie der Körnerboden 74 verlaufen annähernd horizontal, so daß sie nur geringfügig im hinteren Bereich ein wenig zusammenlaufen (siehe Fig. 2).

Das Gebläse 56 ist mit einem Gebläserad 76 ausgerüstet, das in einem Gebläsegehäuse 78 sitzt, in dem entsprechende Auslaßöffnungen angeordnet sind, so daß die austretende Luft nach hinten und oben austritt und an die Unterseite des oberen Siebes 52 und des unteren Siebes 54 herangeführt wird. Hierzu dient auch ein Gebläsekanal 80, der nach hinten und oben gerichtet ist. Ein weiterer Gebläsekanal 82 zeigt nach vorne. An diesen schließt sich ein Krümmer 84 an, der vor dem vorderen Ende des Körnerbodens 74 endet und diesen von oben her und den Siebteil 68 des Zuführbodens 50 von unten her mit Reinigungsluft beaufschlagt.

Eine quer verlaufende Leitvorrichtung 86 befindet sich unterhalb des hinteren Endes des Körnerbodens 74 und nimmt das über die hintere Kante 75 des Körnerbodens 74 geleitete Erntegut auf. Die beiden Leitvorrichtungen 86 und 73 verlaufen trichterförmig zusammen und führen das von dem Körnerboden 74 und dem Siebteil 68 des Zuführbodens 50 teilweise abgegebene Erntegut einem schräg verlaufenden Bodenteil 88 zu, der in eine Schneckenmulde 90 zur Aufnahme der Reinigungsschnecke 60 übergeht. Der vordere Teil des Siebes 54 besteht aus einem Teil 94, der im wesentlichen mit konventionellen Sieben einer Reinigungsvorrichtung übereinstimmt und der eine hintere Abgabekante 96 aufweist. Der Siebteil 94 ist mit einer Verlängerung bzw. einem Siebteil 98 ausgerüstet, der auf der gleichen Ebene liegt wie der Siebteil 98 und mit einer quer verlaufenden vorderen Kante 100 versehen ist. Die Kante 96 des Siebteiles 94 sowie die Kante 100 des Siebteiles 98 bilden eine quer verlaufende Öffnung 102 im Sieb 54 unmittelbar oberhalb der Überkehrschnecke 62. Der Siebteil 94 sowie die Verlängerung bzw. der Siebteil 98 sind beide in einem Rahmen 103 aufgenommen (siehe Fig. 3).

Wie aus Fig. 2 hervorgeht, sind alle Siebe sowie Siebelemente der Reinigungsvorrichtung 38 sowie auch der Rücklaufboden 34 an Lenkern 104 und 105 angeschlossen. Die einzelnen Elemente bzw. Lenker sind derart miteinander verbunden, daß sie über eine einzige Kurbelwelle 106 entsprechend hin- und herbewegt werden können. Beispielsweise können der Zuführboden 50 und das obere Sieb 52 miteinander über einen Lenker 111 verbunden sein, so daß diese als Einheit bewegt werden.

Wird im Arbeitseinsatz das Erntegut über die Erntebergungsvorrichtung 20 vom Feld aufgenommen, so wird es über das Schrägfördergehäuse 22 der Dreschtrommel 26 und dem Dreschkorb 28 zugeführt, wobei das ausgeschiedene Erntegut zum Teil auf den Zuführboden 50 gelangt. Wie insbesondere aus Fig. 2 hervorgeht, kann durch die Anordnung des stromaufwärts liegenden Endes des Siebteiles 68 des Zuführbodens 50 Erntegut, das über den Dreschkorb 28 ausgeschieden wird, von dem vorderen Siebteil 68 ohne weiteres aufgenommen werden. Bei konventionellen Dreschtrommeln und Dreschkörben wird ein hoher Prozentsatz des Erntegutes bereits durch die Dreschtrommel 26 aus der Erntegutmatte ausgeschieden, während nur ein geringer Teil des Erntegutes mit dem Kaff bzw. den Strohanteilen weiterwandert. Die Stroh- und Kaffteile mit den darin enthaltenen Restkörnern werden über den Hordenschüttler geleitet. Der stromaufwärts liegende Siebteil 68 des Zuführbodens 50 nimmt das direkt durch den Dreschkorb 28 ausgeschiedene Erntegut auf und leitet es durch seine Öffnungen, die entsprechend eingestellt werden können. Hier beginnt ein bereits wirkungsvoller Aussiebungsvorgang, wobei die einzelnen Fingerelemente auf der Oberfläche des Zuführbodens 50 den Siebvorgang entsprechend unterstützen. Ferner wird der Siebvorgang durch die Zufuhr der Reinigungsluft aus den Gebläsekanälen 80 und 82 unterstützt, so daß der größte Teil des Erntegutes bzw. der Körner gereinigt auf den Körnerboden 74 gelangt. Der übrige Teil des Erntegutes, das über den Hordenschüttler 30 ausgeschieden wird, gelangt auf den Rücklaufboden 34 und über seine hintere Kante auf den stromabwärts liegenden Siebteil 68 des Zuführbodens 50. Das voluminösere Erntegut enthält einen höheren Prozentsatz an Anteilen von Stroh, Kaff und anderen Bestandteilen sowie relativ kleinem Restkornanteil. Im Arbeitseinsatz wird durch den Zuführboden 50, insbesondere durch die im Siebteil 68 enthaltenen Durchlaßöffnungen, ein entsprechender Anteil des Erntegutes auf den Körnerboden 74 geleitet, wobei gleichzeitig durch die mechanische Einwirkung sowie durch die Windbeaufschlagung der Erntegutmatte eine wirkungsvolle Vorschichtung des Erntegutes erfolgt und dabei die in dem Erntegut enthaltenen Körner in den unteren Bereich der Erntegutmatte wandern. Somit kann der Zuführboden 50 unter anderem auch als Bearbeitungssieb bezeichnet werden, obwohl er gleichzeitig auch dazu beiträgt, das Erntegut weiterzufördern. Der Siebteil 68 steht der Funktion der normalen Siebe 52 und 54 der Reinigungsvorrichtung nicht entgegen, zumal er sich von den regulären Sieben 52 und 54 in wesentlichen Dingen unterscheidet. Unter anderem erhält er zwei unterschiedliche Gemische von Erntegut, und zwar von dem Dreschkorb 28 und dem Hordenschüttler 30. Ähnlich wie bei den Sieben 52 und 54 der Reinigungsvorrichtung 38 wird dem Erntegut über den Zuführboden 50 ein Bewegungsimpuls vermittelt, der stärker ist als bei konventionellen Sieben. Insbesondere durch die Koppelung des Zuführbodens 50 mit dem oberen Sieb 52 können diese beiden Siebe als einteiliges, oberes Sieb angesehen werden, die miteinander eine Durchlaßöffnung bilden. Diese wird durch die hintere Kante 70 des Siebteiles 68 und durch die vordere Kante des Siebes 52 gebildet. Die am Zuführboden 50 angeordneten Finger 72 unterstützen den Schichtungsvorgang des Bearbeitungssiebes bzw. des Zuführbodens 50, wenn das Erntegut über die Kante 70 des hinteren Siebteils 68 des Zuführbodens 50 geleitet wird und dann dem Sieb 52 zugeführt wird.

Durch die hin- und hergehende Bewegung des Körnerbodens 74 werden die gereinigten Körner nach hinten über die Kante 75 geleitet und fallen dann nach unten, wobei sie dann über die Leitvorrichtung 86 der Reinigungsschnecke 60 zugeführt werden. Ein hoher Anteil des gereinigten Erntegutes wird über den Siebteil 68 des Zuführbodens 50 und die Leitvorrichtung 73 nach unten geleitet und mit dem Erntegut aus dem Körnerboden 74 zu einem Gutstrom zusammengeführt. Der gemeinsame Gutstrom wird dann mit Reinigungsluft aus dem Gebläse 56 beaufschlagt und gelangt unter der Reinigungswirkung zur Reinigungsschnecke 60. Durch den Luftstrom aus dem Gebläse 56 werden die verbleibenden Kaffanteile, unter anderem kleine Partikel, von dem Erntegut weggeführt. Wie insbesondere aus Fig. 2 hervorgeht, tritt der Erntegutstrom in den Luftstrom an einer Stelle ein, die auf der horizontalen Ebene des zweiten Siebes 54 liegt. Die Eintauchstelle des Erntegutes in den Luftstrom ist weit genug von der stromaufwärts liegenden Kante des Siebes 54 entfernt, so daß dadurch die Möglichkeit herabgesetzt wird, daß Teile des ersten Teiles des gereinigten Erntegutes auf die Oberfläche des Siebteiles 94 gelangen. Ein derartigen Übergang des Erntegutes auf die Oberfläche des Siebteiles 54 würde natürlich den Vorteil der Erfindung reduzieren bzw. aufheben. Gemäß der Erfindung ist es vorteilhaft, daß die Reinigungselemente so ausgebildet sind, daß ein Teil des ersten gereinigten Erntegutes durch den Siebteil 68 des Zuführbodens 50 wandert und dadurch zur Reinigungsschnecke 60 gelangt, so daß dieses Erntegut nicht mehr auf den Siebteil 94 gefördert zu werden braucht und dieser dadurch entlastet werden kann.

Das über das Sieb 52 und den Siebteil 94 unterhalb des oberen Siebes 52 ausgesiebte Erntegut gelangt auf den Boden 58 und dann zur Reinigungsschnecke 60, während ein Teil des Kaffes und das noch nicht vollständig gereinigte Erntegut über das Abgabeende 53 und dann zur Überkehrschnecke 62 geleitet wird.

Die stromabwärts liegenden Teile des oberen Siebes 52 und des unteren Siebes 54 sind in Fig. 3 besonders veranschaulicht. Diese Teile unterscheiden sich von den herkömmlichen Teilen von Sieben einer Reinigungsvorrichtung. In vorteilhafter Weise liegt das Abgabeende 53a des oberen Siebes 52 und das Abgabeende bzw. die Kante 96 des unteren Siebes 54 in etwa auf der gleichen vertikal verlaufenden Ebene. Die Verlängerung bzw. der Siebteil 98 des unteren Siebes 54 liegt in etwa auf der gleichen Ebene wie der Siebteil 94. Der Schlitz bzw. die Öffnung 102 wird durch die hintere Kante 96 des Siebteiles 94 und durch die vordere Kante des Siebteiles 98 gebildet. Ferner verlaufen die Siebe 52 und 54 etwas nach hinten zusammen. Am Ende des oberen Siebes 52 befinden sich Finger 72a, die sich über die Kante 53a des Siebes 52 hinaus stromabwärts nach hinten und etwas nach oben erstrecken. Das noch nicht vollständig gereinigte bzw. ungedroschene Erntegut bzw. die Ähren, die nicht durch die relativ großen Öffnungen des Siebes 52 wandern können und somit über die Kante 53a gefördert werden, fallen dann auf den hinteren stromabwärts liegenden Siebteil 98 und anschließend zur Überkehrschnecke 62. Durch die Verwendung der Öffnung 102 zwischen dem Ende des Siebteiles 94 und der Siebverlängerung bzw. des Siebteiles 98 wird die Arbeitsweise des Siebteiles 94 verbessert, da das noch nicht ausgedroschene Erntegut über die Kante 96 direkt zur Überkehrschnecke 62 gelangen kann. Die Anordnung der Finger 72a an dem Sieb 52 ist besonders vorteilhaft, da diese auf einfache Weise an das Abgabeende 53a des Siebes 52 angeschlossen sind. Die Durchlaßöffnungen in den Sieben 52 und 54 sind unabhängig von der Breite der Siebe gewählt und ohne daß hierzu eine Verlängerung der Siebe erforderlich ist. Die Erhöhung des volumetrischen Wirkungsgrades hängt auch davon ab, daß die Gesamtoberfläche der Siebe vergrößert ist und daß eine gute Aussortierung und Vorschichtung des Erntegutes auf den Sieben stattfindet. Die Belastung der übrigen Teile der Siebe ist wesentlich herabgesetzt, da das Gesamtvolumen des Erntegutes, das bearbeitet bzw. vorgeschichtet werden muß und das normalerweise auf der zweiten Hälfte der sogenannten Bearbeitungssiebe erfolgt, reduziert werden konnte. Die so behandelte Erntegutmatte trägt wesentlich zur Erhöhung der Kapazität der Siebe bei, da diese über ihre gesamte Länge für eine einwandfreie Aussiebung zur Verfügung stehen.

Eine weitere Verbesserung der Reinigungsvorrichtung wird dadurch erreicht, daß der Körnerboden einmal als Förderer und zum anderen als Bearbeitungsorgan eingesetzt werden kann. Die Aufteilung des Erntegutstromes verbunden mit der vorteilhaften Steuerung der Öffnungen in den Siebteilen ermöglicht eine abgestufte Reinigung ohne zusätzliche Siebe. Die Bearbeitungssiebe lassen sich somit auf einfache Weise in dem zur Verfügung stehenden vertikalen Raum unterhalb des Hordenschüttlers unterbringen. Ein weiterer Vorteil besteht darin, daß der Siebteil 98 auf der gleichen Ebene liegt wie der übrige Teil des Siebes 54, wobei der Siebteil in vorteilhafter Weise eine Durchlaßöffnung mit dem hinteren Ende des vorderen Siebteiles 94 bildet. Verstellelemente zur Veränderung der Durchlaßöffnung in den Sieben (nicht dargestellt), insbesondere am stromabwärts liegenden Ende oder der hinteren Kante 112 des Siebteiles 98, erleichtert den Zugang zu den Verstellelementen.

**Patentansprüche**

1. Mähdrescher mit Dresch- (26) und Trennteil (28) und mit einem unter diesem angeordneten und diesem nachgeordneten, über den Dresch- und Trennteil mit Erntegut beaufschlagbaren, ein erstes Sieb (68) auf seinem in Fahrtrichtung hinteren Teil aufweisenden Zuführboden (50), der einen Teil einer Reinigungsvorrichtung bildet, die aus einem weiteren zweiten Sieb (52) sowie einem dritten unterhalb des oberen zweiten Siebes angeordneten Sieb (54) besteht, wobei das erste stromaufwärts liegende Sieb (68) mit seinem stromabwärts liegenden Ende (70) oberhalb des vorderen Endes des vertikal nach unten versetzten zweiten Siebes (52) liegt, die Enden des ersten Siebes (68) und des zweiten Siebes (52) einen Durchlaßspalt für Reinigungsluft bilden und den Sieben (52, 54) ein Gebläse (56) mit einem ersten Auslaßstutzen zugeordnet ist, über den zumindest die stromabwärts liegenden zweiten und dritten Siebe (52, 54) von unten her mit Reinigungsluft beaufschlagt werden, und ein Körnerboden unter dem ersten Sieb (68) angeordnet ist, wobei ein Teil des Erntegutes durch das erste Sieb (68) auf diesen Körnerboden (74) und der andere Teil des Erntegutes über das erste Sieb (68) auf das zweite Sieb (52) und danach auf das dritte Sieb (54) geleitet wird und das gesamte Erntegut Letztlich zu einer Reinigungsschnecke (60) geleitet wird, dadurch gekennzeichnet, daß die hintere Kante des Körnerbodens (74) einen Abstand zu den zweiten und dritten Sieben (52, 54) aufweist, so daß das von dem Körnerboden abgegebene Erntegut unmittelbar zu der Reinigungsschnecke (60) geleitet wird, und daß das Gebläse einen zweiten Auslaßstutzen (82) besitzt, über den der Körnerboden (74) von vorne her mit Reinigungsluft beaufschlagt wird.

2. Mähdrescher nach Anspruch 1, dadurch gekennzeichnet, daß das unter dem Körnerboden (74) angeordnete Gebläse (56) mit einem ersten nach hinten und einem zweiten nach vorne gerichteten Gebläsekanal (80, 82) versehen ist, wobei der erste Gebläsekanal (80) Reinigungsluft der Unterseite des zweiten Siebes (52) sowie dem darunter angeordneten dritten Sieb (54) zuführt, während der zweite Gebläsekanal (82) an den Bereich des vorderen Endes des Körnerbodens (74) herangeführt ist und Reinigungsluft der Unterseite des ersten Siebes (68) sowie der Oberfläche des Körnerbodens (74) zuführt.

3. Mähdrescher nach den Ansprüchen 1 und 2, dadurch gekennzeichnet, daß der erste Gebläsekanal (80) derart ausgerichtet ist, daß die Reinigunsluft auf den Erntegutstrom aus dem Körnerboden (74) auftrifft.

4. Mähdrescher nach einem oder mehreren der vorherigen Ansprüche, dadurch gekennzeichnet, daß das erste Sieb (68) fingerartige Leitelemente (72) aufweist, unter denen das vordere Ende des zweiten Siebes (52) liegt, wobei im Bereich und unterhalb des hinteren Endes (70) des ersten Siebes (68) eine Leitvorrichtung (73) angeordnet ist, die das Erntegut in den aus dem ersten Gebläsekanal (80) heraustretenden Reinigungsluftstom leitet.

5. Mähdrescher nach einem oder mehreren der vorherigen Ansprüche, dadurch gekennzeichnet, daß der Zuführboden (50) aus einem vorderen, undurchlässigen Teil (66) und aus einem mit diesem verbundenen, auf der gleichen Ebene angeordneten Siebteil (68) gebildet ist, der das erste Sieb bildet und unter dem der Körnerboden (74) vorgesehen ist.

6. Mähdrescher nach einem oder mehreren der vorherigen Ansprüche, dadurch gekennzeichnet, daß das zweite Sieb bzw. Siebteil (52) sowie das darunter liegende dritte Sieb (54) plan ausgebildet, in etwa horizontal verlaufend angeordnet sind und konvergierend zueinander verlaufen, wobei das Abgabeende (53) des zweiten Siebteils (52) vor einer Durchlaßöffnung (102) des unteren Siebes (54) endet.

7. Mähdrescher nach einem oder mehreren der vorherigen Ansprüche, dadurch gekennzeichnet, daß am hinteren Ende (75) des Körnerbodens (74) eine in Strömungsrichtung geneigt verlaufende Leitvorrichtung (86) und im Bereich des hinteren Endes (70) des stromaufwärts liegenden Siebteiles (68) eine ebenfalls zur Leitvorrichtung (86) konvergierend verlaufende Leitvorrichtung (73) vorgesehen sind, die das Erntegut der Reinigungsschnecke (60) zuführen.

8. Mähdrescher nach Anspruch 1, dadurch gekennzeichnet, daß die Durchlaßöffnung (102) im unteren Sieb (54) über einer Überkehrschnecke (62) vorgesehen ist.

9. Mähdrescher nach einem oder mehreren der vorherigen Ansprüche, dadurch gekennzeichnet, daß die Gesamtfläche des Siebteiles (68) in etwa gleich groß ist wie die Gesamtfläche des nachgeschalteten oberen Siebes (52) und größer als die Gesamtfläche des undurchlässigen Teils (66) des Körnerbodens (74).

**Claims**

1. A combine harvester comprising a threshing (26) and separating portion (28) and a feed tray (50) which is arranged beneath and downstream of same and which can be supplied with crop material by way of the threshing and separating portion and which has a first sieve (68) on its rearward part in the direction of travel and which forms a part of a cleaning apparatus which consists of a further second sieve (52) and a third sieve (54) which is arranged beneath the upper second sieve, wherein the first upstream sieve (68) lies with its downstream end (70) above the front end of the vertically downwardly displaced second sieve (52), the ends of the first sieve (68) and the second sieve (52) form a through-flow gap for cleaning air and associated with the sieves (52, 54) is a fan (56) having a first outlet connection by way of which at least the downstream second and third sieves (52, 54) are supplied with cleaning air from below, and a grain tray is arranged under the first sieve (68), wherein a part of the crop material is passed through the first sieve (68) onto said grain tray (74) and the other part of the crop material is passed by way of the first sieve (68) on to the second sieve (52) and thereafter on to the third sieve (54), and finally all the crop material is passed to a cleaning auger (60), characterised in that the rearward edge of the grain tray (74) is at a spacing from the second and third sieves (52, 54) so that the crop material discharged from the grain tray is passed directly to the cleaning auger (60), and that the fan has a second outlet connection (82) by way of which the grain tray (74) is supplied with cleaning air from the front.

2. A combine harvester according to claim 1 characterised in that the fan (56) which is arranged under the grain tray (74) is provided with a first rearwardly directed and a second forwardly directed passage (80, 82), wherein the first passage (80) feeds cleaning air to the underside of the second sieve (52) and the third sieve (54) disposed therebeneath while the second passage (82) is taken to the region fo the front end of the grain tray (74) and feeds cleaning air to the underside of the first sieve (68) and the surface of the grain tray (74).

3. A combine harvester according to claims 1 and 2 characterised in that the first passage (80) is so directed that the cleaning air impinges on the flow of crop material from the grain tray (74).

4. A combine harvester according to one or more of the preceding claims characterised in that the first sieve (68) has finger-like guide elements (72) under which the front end of the second sieve (52) is disposed, wherein arranged in the region of and underneath the rearward end (70) of the first sieve (68) is a guide means (73) which guides the crop material into the flow of cleaning air with issues from the first passage (80) of the fan.

5. A combine harvester according to one or more of the preceding claims characterised in that the feed tray (50) is formed from a front, impervious portion (66) and a sieve portion (68) which is connected thereto and which is arranged on the same plane and which forms the first sieve and beneath which the grain tray (74) is provided.

6. A combine harvester according to one or more of the preceding claims characterised in that the second sieve or sieve portion (52) and the third sieve (54) disposed therebeneath are of a planar configuration, are arranged to extend substantially horizontally and converge towards each other, wherein the discharge end (53) of the second sieve portion (52) terminates in front of a through opening (102) in the lower sieve (54).

7. A combine harvester according to one or more of the preceding claims characterised in that provided at the rearward end (75) of the grain tray (74) is a guide means (86) which extends inclinedly in the direction of flow and provided in the region of the rearward end (70) of the upstream sieve portion (68) is a guide means (73) which also extends in converging relationship with the guide means (86) and which feed the crop material to the cleaning auger (60).

8. A combine harvester according to claim 1 characterised in that the through opening (102) in the lower sieve (54) is provided over a transfer auger (62).

9. A combine harvester according to one or more of the preceding claims characterised in that the total area of the sieve portion (68) is approximately equal to the total area of the downstream-disposed upper sieve (52) and is larger than the total area of the impervious part (66) of the grain tray (74).

**Revendications**

1. Moissonneuse-batteuse comprenant un ensemble de battage (26) et de séparation (28) et une table d'amenée (50) disposée au-dessous de cet ensemble et en aval de celui-ci, pouvant être alimentée en produits de récolte au moyen de l'ensemble de battage et de séparation comportant un premier crible (68) sur sa partie postérieure dans le sens de déplacement, qui fait partie d'un dispositf de nettoyage qui comprend un autre crible ou second crible (52), ainsi qu'un troisième crible (54) placé au-dessous du second crible supérieur, le premier crible (68) situé en amont se trouvant, par son extrémité (70) située en aval, au-dessus de l'extrémité antérieure du second crible (52) décalé verticalement vers le bas, les extrémités du premier crible (68) et du second crible (52) formant un interstice de passage pour l'air de nettoyage et une soufflerie (56) étant rattachée aux cribles (52, 54), cette soufflerie comportant un premier conduit ou canal de sortie par lequel au moins le second crible (52) et le troisième crible (54) situés en aval sont alimentés par le bas en air de nettoyage, une table à grain étant placée au-dessous du premier crible (68), une partie de produits de récolte étant amenée par le premier crible (68) sur cette table à grain (74) et l'autre partie des produits de récolte étant amenée par l'intermédiaire du premier crible (68) au second crible (52), puis au troisième crible (54) et la totalité des produits de récolte étant finalement amenée à une vis de nettoyage (60), caractérisée en ce que le bord postérieur de la table à grain (74) est à une certaine distance du second crible (52) et du troisième crible (54), de sorte que les produits de récolte débités à partir de la table à grain sont amenés directement à la vis de nettoyage (60), et en ce que la soufflerie comporte un second conduit ou canal de sortie (82) par l'intermédiaire duquel la table à grain (74) est alimentée par l'avant en air de nettoyage.

2. Moissonneuse-batteuse suivant la revendication 1, caractérisée en ce que la soufflerie (56) placée au-dessous de la table à grain (74) comporte un premier canal ou conduit (80) dirigé vers l'arrière et un second canal ou conduit (82) dirigé vers l'avant, le premier canal (80) de la soufferie envoyant de l'air de nettoyage sur la face inférieure du second crible (52) ainsi que sur le troisième crible (54) placé au-dessous, tandis que le second canal (82) de la soufflerie rejoint la zone de l'extrémité antérieure de la table à grain (74) et envoie de l'air de nettoyage sur la face inférieure du premier crible (68), ainsi que sur la surface de la table à grain (74).

3. Moissonneuse-batteuse suivant les revendications 1 et 2, caractérisée en ce que le premier canal (80) de la soufflerie est orienté de façon que l'air de nettoyage soit dirigé sur le courant de produits de récolte quittant la table à grain (74).

4. Moissonneuse-batteuse suivant une ou plusieurs des revendications précédentes, caractérisée en ce que le premier crible (68) comporte des élements de guidage (72) en forme de doigts sous lesquels se trouve l'extrémité antérieure du second crible (52), un dispositif de guidage (73) qui dirige les produits de récolte dans le courant d'air quittant le premier canal de nettoyage (80) étant disposé au voisinage et au-dessous de l'extrémité postérieure (70) du premier crible (68).

5. Moissonneuse-batteuse suivant une ou plusieurs des revendications précédentes, caractérisée en ce que la table d'amenée (50) est constituée par une section antérieure imperméable (66) et par une section de crible (68) reliée à la précédente et disposée dans le même plan, qui constitue le premier crible et sous laquelle la table à grain (74) est prévue.

6. Moissonneuse-batteuse suivant une ou plusieurs des revendications précédentes, caractérisée en ce que le second crible ou la section de crible (52), ainsi que le troisième crible (54) placé au-dessous sont plans, sont disposés sensiblement horizontalement et convergent l'un vers l'autre, l'extrémité de décharge ou de sortie (53) de la seconde section de crible (52) se terminant devant un orifice de passage (102) du crible inférieur (54).

7. Moissonneuse-batteuse suivant une ou plusieurs des revendications précédentes, caractérisée en ce qu'il est prévu, à l'extrémité postérieure (75) de la table à grain (74), un dispositif de guidage (86) incliné dans la direction d'acheminement et, dans la zone de l'extrémité postérieure (70) de la section de crible (68) disposée en amont, un dispositif de guidage (73) convergeant également vers le dispositif de guidage (86), ces dispositifs amenant les produits de récolte à la vis de nettoyage (60).

8. Moissonneuse-batteuse suivant la revendication 1, caractérisée en ce que l'orifice de passage (102) du crible inférieur (54) est prévu au-dessus d'une vis de transfert (62).

9. Moissonneuse-batteuse suivant une ou plusieurs des revendications précédentes, caractérisée en ce que la surface totale de la section de crible (68) est sensiblement égale à la surface totale du crible supérieur (52) placé après et supérieure à la surface totale de la section imperméable (66) de la table à grain (74).

*Fig. I*

*Fig. 3*

Fig. 2

0 121 094